# EUROPEAN PATENT APPLICATION

(11) **EP 4 679 889 A1**
(43) Date of publication of application: **14.01.2026**
(21) Application number: 23933001.2
(22) Date of filing: 12.04.2023
(51) Int. Cl.: H04W 36/18

(54) **TERMINAL DEVICE, SHARING ACCESS POINT, SHARED ACCESS POINT, AND COMMUNICATION METHOD THEREFOR**

(71) Applicant: NTT, Inc., Tokyo 100-8116 (JP)
(72) Inventor: KISHIDA, Akira, Musashino-shi, Tokyo 180-8585 (JP); NAGATA, Kengo, Musashino-shi, Tokyo 180-8585 (JP); ASAI, Yusuke, Musashino-shi, Tokyo 180-8585 (JP); TAKATORI, Yasushi, Musashino-shi, Tokyo 180-8585 (JP)
(74) Representative: Nederlandsch Octrooibureau
(86) International application number: PCT/JP2023/014918
(87) International publication number: WO 2024/214225

(57) **Abstract**

A terminal apparatus configures a communication system with a sharing access point, and a shared access point and another shared access point provided at positions away from the sharing access point. The terminal apparatus is configured to request, when a first wireless link with the sharing access point via the shared access point is established, the sharing access point to switch from the first wireless link, and switch from the first wireless link to a second wireless link with the sharing access point via the another shared access point in response to a notification based on a request from the sharing access point to the shared access point and the another shared access point.

## Description

### Technical Field

An embodiment relates to a terminal apparatus, a sharing access point, a shared access point, and a communication method thereof.

### Background Art

A wireless local area network (LAN) is known as a communication system that wirelessly connects an access point (AP) and a terminal apparatus. The terminal apparatus performs wireless connection by requesting an association from the access point.

### Citation List

### Non Patent Literature

Non Patent Literature 1: IEEE 802.11, p264-265, 4.5.3.3 Association, 4.5.3.4 Reassociation, 2020

### Summary of Invention

### Technical Problem

When the terminal apparatus switches the access point to which the terminal apparatus is wirelessly connected, it is desirable to switch the access point without causing instantaneous interruption.

The present invention has been made in view of the above circumstances, and an object of the present invention is to provide a wireless communication environment in which an access point can be switched without causing instantaneous interruption.

### Solution to Problem

A terminal apparatus according to one aspect configures a communication system with a sharing access point, and a shared access point and another shared access point provided at positions away from the sharing access point. The terminal apparatus is configured to request, when a first wireless link with the sharing access point via the shared access point is established, the sharing access point to switch from the first wireless link, and switch from the first wireless link to a second wireless link with the sharing access point via the another shared access point in response to a notification based on the request from the sharing access point to the shared access point and the another shared access point.

### Advantageous Effects of Invention

According to the embodiment, it is possible to provide a wireless communication environment in which an access point can be switched without causing instantaneous interruption.

### Brief Description of Drawings

Fig. 1 is a block diagram illustrating a configuration of a communication system according to an embodiment.
Fig. 2 is a block diagram illustrating an example of a hardware configuration of a sharing AP according to the embodiment.
Fig. 3 is a block diagram illustrating an example of a hardware configuration of a shared AP according to the embodiment.
Fig. 4 is a block diagram illustrating an example of a hardware configuration of a terminal apparatus according to the embodiment.
Fig. 5 is a block diagram illustrating an example of a functional configuration of the sharing AP according to the embodiment.
Fig. 6 is a table illustrating an example of a data structure of multi-AP management information stored in the sharing AP according to the embodiment.
Fig. 7 is a table illustrating an example of a data structure of terminal apparatus management information stored in the sharing AP according to the embodiment.
Fig. 8 is a block diagram illustrating an example of a functional configuration of the shared AP according to the embodiment.
Fig. 9 is a table illustrating an example of a data structure of link management information stored in the shared AP according to the embodiment.
Fig. 10 is a block diagram illustrating an example of a functional configuration of the terminal apparatus according to the embodiment.
Fig. 11 is a table illustrating an example of a data structure of link management information stored in the shared AP and the terminal according to the embodiment.
Fig. 12 is a sequence diagram illustrating an example of association processing in the communication system according to the embodiment.
Fig. 13 is a sequence diagram illustrating an example of handover processing in the communication system according to the embodiment.
Fig. 14 is a flowchart illustrating an example of determination processing in the communication system according to the embodiment.
Fig. 15 is a block diagram illustrating an example of a functional configuration of a sharing AP according to a modification.

### Description of Embodiments

Hereinafter, an embodiment will be described with reference to the drawings. Note that in the following description, components having the same functions and configurations will be denoted by common reference signs.

### 1. Embodiment

### 1.1 Configuration

### 1.1.1 Communication System

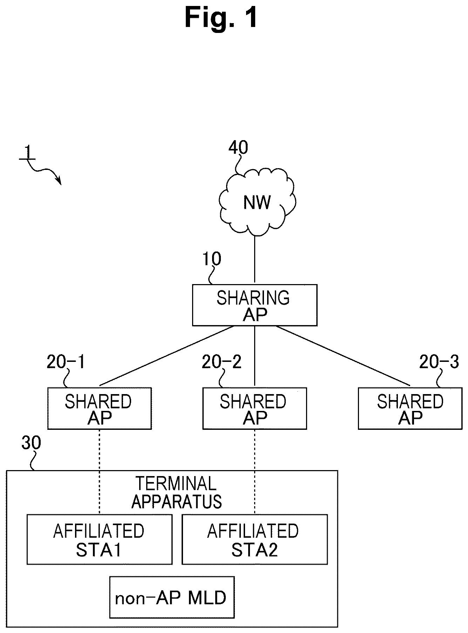

Fig. 1 is a block diagram illustrating an example of a configuration of a communication system according to an embodiment. As illustrated in Fig. 1, a communication system 1 includes a sharing AP 10, shared APs 20-1, 20-2, and 20-3, a terminal apparatus 30, and a network 40.

The sharing AP 10 is, for example, an access point of a wireless LAN. The sharing AP 10 is configured to communicate with a server (not illustrated) on the network 40 in a wired or wireless manner. The sharing AP 10 is configured to communicate with each of the shared APs 20-1, 20-2, and 20-3 in a wired manner.

Each of the shared APs 20-1, 20-2, and 20-3 is, for example, an access point of a wireless LAN. The shared APs 20-1, 20-2, and 20-3 are different access points from one another and are provided at positions physically separated from one another. For this reason, the shared APs 20-1, 20-2, and 20-3 have different communicable areas from one another. Each of the shared APs 20-1, 20-2, and 20-3 is configured to communicate with the terminal apparatus 30 in a wireless manner. Communication between each of the shared APs 20-1, 20-2, and 20-3 and the terminal apparatus 30 is compliant with, for example, the IEEE802.11 standard. Note that the shared APs 20-1, 20-2, and 20-3 have configurations equivalent to one another. Hereinafter, the shared APs 20-1, 20-2, and 20-3 may be described as shared AP(s) 20 unless otherwise especially distinguished.

The terminal apparatus 30 is a wireless terminal apparatus such as a smartphone or a personal computer (PC). The terminal apparatus 30 is configured to communicate with a server on the network 40 by communicating with the sharing AP 10 via at least one shared AP 20 of the shared APs 20-1, 20-2, and 20-3. That is, it can be said that the terminal apparatus 30 and the sharing AP 10 are wirelessly connected via at least one shared AP 20 of the shared APs 20-1, 20-2, and 20-3. Hereinafter, such a wireless connection method between the terminal apparatus 30 and the sharing AP 10 is also referred to as a multi-AP connection method.

Specifically, the terminal apparatus 30 includes non-AP MLD, an affiliated station (STA) 1, and an affiliated STA 2. The non-AP MLD is a multi-link device (MLD) in the terminal apparatus 30, and is an entity configured to be logically and wirelessly connected (that is, to establish a wireless link) with the sharing AP 10 by the multi-AP connection method. Each of the affiliated STA 1 and the affiliated STA 2 is an entity configured to be physically and wirelessly connected (that is, to exchange data) with the shared AP 20 by the multi-AP connection method.

In the multi-AP connection method, a wireless link via the shared AP 20-1, a wireless link via the shared AP 20-2, and a wireless link via the shared AP 20-3 are comprehensively established between the sharing AP 10 and the non-AP MLD of the terminal apparatus 30. In other words, the shared APs 20-1, 20-2, and 20-3 are candidates for a transit destination in data exchange between the sharing AP 10 and the terminal apparatus 30. Then, each of the affiliated STA 1 and the affiliated STA 2 of the terminal apparatus 30 selects one wireless link among the established wireless links and executes data exchange. The example of Fig. 1 illustrates a case where the sharing AP 10 and the non-AP MLD of the terminal apparatus 30 exchange data using a wireless link between the affiliated STA 1 and the shared AP 20-1 and a wireless link between the affiliated STA 2 and the shared AP 20-2.

Note that, in the present specification, the shared APs 20-1, 20-2, and 20-3 are also referred to as access points "belonging" to the sharing AP 10 in the multi-AP connection method.

The sharing AP 10, the shared APs 20-1, 20-2, and 20-3, and the terminal apparatus 30 have, for example, a wireless communication function based on an open systems interconnection (OSI) reference model. In the OSI reference model, the wireless communication function is divided into seven layers (a first layer: a physical layer, a second layer: a data link layer, a third layer: a network layer, a fourth layer: a transport layer, a fifth layer: a session layer, a sixth layer: a presentation layer, and a seventh layer: an application layer). The data link layer includes a logical link control (LLC) sublayer and a media access control (MAC) sublayer.

### 1.1.2. Hardware Configuration

Next, hardware configurations of the access points and the terminal apparatus in the communication system according to the embodiment will be described.

### 1.1.2.1 Hardware Configuration of Sharing AP

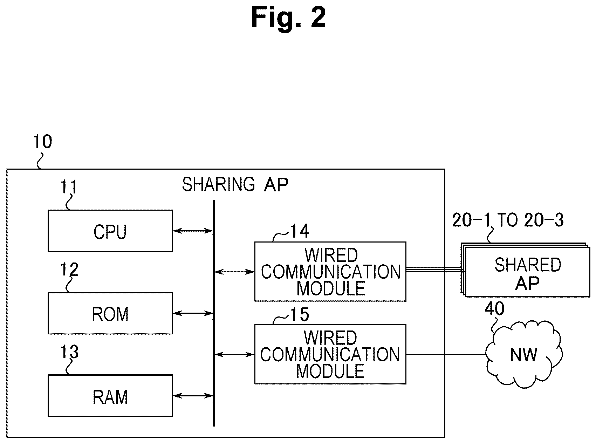

Fig. 2 is a block diagram illustrating an example of a hardware configuration of the sharing AP according to the embodiment. As illustrated in Fig. 2, the sharing AP 10 includes, for example, a central processing unit (CPU) 11, a read only memory (ROM) 12, a random access memory (RAM) 13, a wired communication module 14, and a wired communication module 15.

The CPU 11 is processing circuitry that controls the entire operation of the sharing AP 10. The ROM 12 is a nonvolatile semiconductor memory, for example. The ROM 12 stores a program for controlling the sharing AP 10, and data. The RAM 13 is, for example, a volatile semiconductor memory. The RAM 13 is used as a working area of the CPU 11. The wired communication modules 14 and 15 are circuits used to transmit and receive data by wired signals. The wired communication module 14 is connected to the shared APs 20-1, 20-2, and 20-3. The wired communication module 15 is connected to the network 40.

### 1.1.2.2 Hardware Configuration of Shared AP

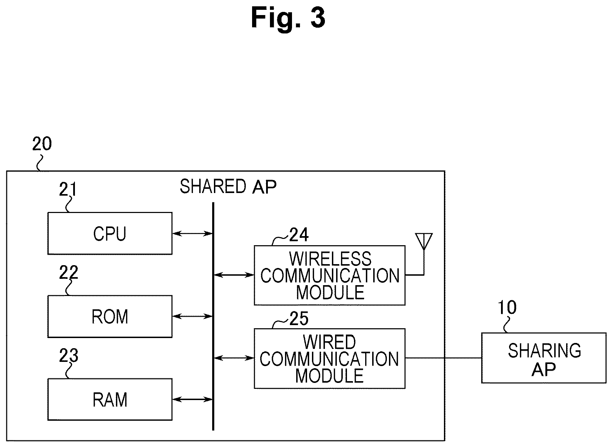

Fig. 3 is a block diagram illustrating an example of a hardware configuration of the shared AP according to the embodiment. As illustrated in Fig. 3, the shared AP 20 includes, for example, a CPU 21, a ROM 22, a RAM 23, a wireless communication module 24, and a wired communication module 25.

The CPU 21 is processing circuitry that controls an entire operation of the shared AP 20. The ROM 22 is a nonvolatile semiconductor memory, for example. The ROM 22 stores a program for controlling the shared AP 20, and data. The RAM 23 is, for example, a volatile semiconductor memory. The RAM 23 is used as a working area of the CPU 21. The wireless communication module 24 is a circuit used to transmit and receive data by wireless signals. The wireless communication module 24 is connected with an antenna. The wired communication module 25 is a circuit used to transmit and receive data by wired signals. The wired communication module 25 is connected to the sharing AP 10.

### 1.1.2.3 Hardware Configuration of Terminal Apparatus

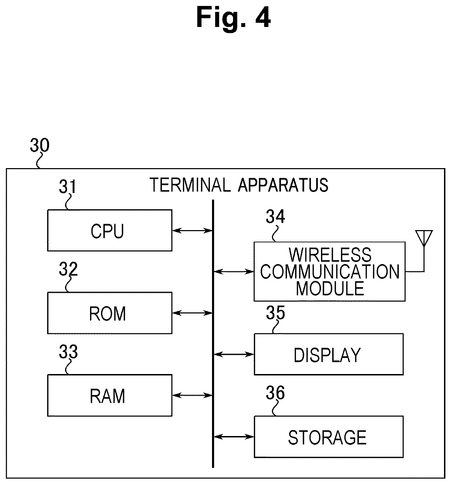

Fig. 4 is a block diagram illustrating an example of a hardware configuration of the terminal apparatus according to the embodiment. As illustrated in Fig. 4, the terminal apparatus 30 includes, for example, a CPU 31, a ROM 32, a RAM 33, a wireless communication module 34, a display 35, and a storage 36.

The CPU 31 is processing circuitry that controls an entire operation of the terminal apparatus 30. The ROM 32 is a nonvolatile semiconductor memory, for example. The ROM 32 stores a program for controlling the terminal apparatus 30, and data. The RAM 33 is, for example, a volatile semiconductor memory. The RAM 33 is used as a working area of the CPU 31. The wireless communication module 34 is a circuit used to transmit and receive data by wireless signals. The wireless communication module 34 is connected with an antenna. The display 35 is, for example, a liquid crystal display (LCD) or an electro luminescence (EL) display. The display 35 displays a graphical user interface (GUI) corresponding to application software, or the like. The storage 36 is a nonvolatile storage device. The storage 36 stores system software of the terminal apparatus 30, and the like.

### 1.1.3 Functional Configuration

Next, functional configurations of the access points and the terminal apparatus in the communication system according to the embodiment will be described.

### 1.1.3.1 Functional Configuration of Sharing AP

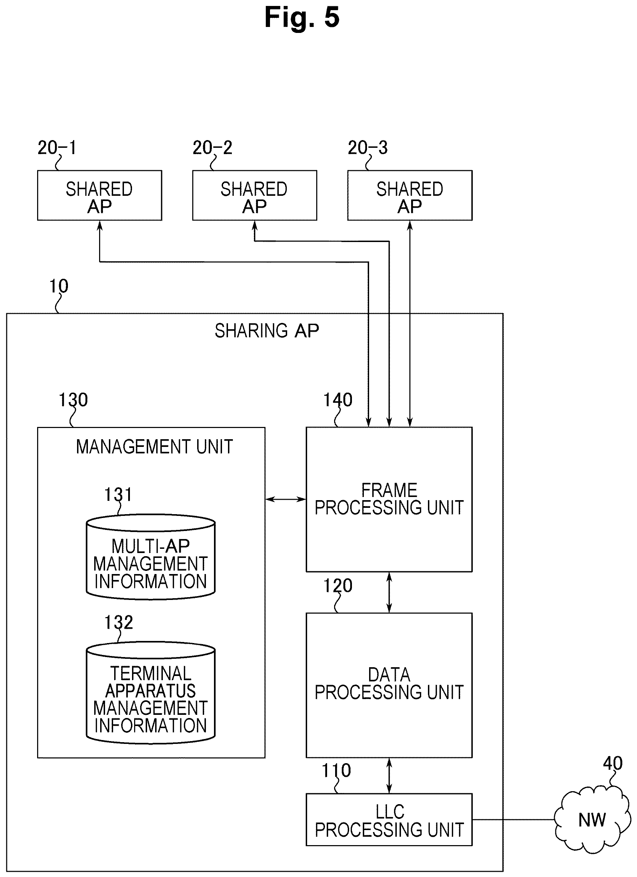

Fig. 5 is a block diagram illustrating an example of a functional configuration of the sharing AP according to the embodiment.

The sharing AP 10 functions as a computer including an LLC processing unit 110, a data processing unit 120, a management unit 130, and a frame processing unit 140. The LLC processing unit 110 is a functional block that executes processing corresponding to the LLC sublayer of the second layer and the third layer to the seventh layer. The data processing unit 120, the management unit 130, and the frame processing unit 140 are functional blocks that execute processing corresponding to the MAC sublayer of the second layer.

The LLC processing unit 110 adds, for example, a destination service access point (DSAP) header, a source service access point (SSAP) header, and the like to the data received from the network 40 to generate an LLC packet. Then, the LLC processing unit 110 inputs the generated LLC packet to the data processing unit 120. In addition, the LLC processing unit 110 extracts data from the LLC packet input from the data processing unit 120. Then, the LLC processing unit 110 transmits the extracted data to the network 40.

The data processing unit 120 inputs the LLC packet input from the LLC processing unit 110 to the frame processing unit 140. In addition, the data processing unit 120 inputs the LLC packet input from the frame processing unit 140 to the LLC processing unit 110.

The management unit 130 controls establishment of a logical wireless connection (wireless link) between the sharing AP 10 and the non-AP MLD of the terminal apparatus 30 in a multi-AP connection. For example, the management unit 130 executes association processing in response to an association request from the terminal apparatus 30. Further, the management unit 130 performs control such that instantaneous interruption does not occur in physical wireless connection (data exchange) between the shared AP 20 and the affiliated STA of the terminal apparatus 30 in the multi-AP connection. For example, the management unit 130 executes handover processing in response to a handover request from the terminal apparatus 30. In addition, the management unit 130 stores multi-AP management information 131 and terminal apparatus management information 132.

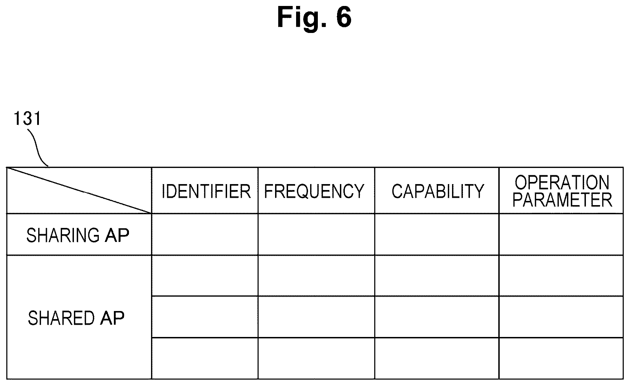

Fig. 6 is a table illustrating an example of a data structure of the multi-AP management information stored in the sharing AP according to the embodiment.

As illustrated in Fig. 6, the multi-AP management information 131 stores information regarding the access points (that is, the sharing AP 10 and the shared APs 20-1, 20-2, and 20-3) used for the multi-AP connection. The information regarding the access points used for the multi-AP connection specifically includes, for example, an identifier, a frequency band, capability information, and operation parameters.

The identifier includes, for example, a MAC address of a corresponding access point.

The frequency band includes information indicating a frequency band used by a corresponding access point. As the frequency band, for example, a 2.4 GHz band, a 5 GHz band, a 6 GHz band, a 45 GHz band, a 60 GHz band, or the like can be applied. Each frequency band includes a plurality of channels.

The capability information includes, for example, information indicating whether or not the multi-AP connection method is supported.

The operation parameters include, for example, CWmin, CWmax, an arbitration interframe space (AIFS), and a transmission opportunity (TXOP) Limit. CWmin and CWmax indicate a minimum value and a maximum value of a contention window, respectively. The contention window is a parameter used to calculate backoff that is a transmission wait time for collision avoidance. AIFS is a fixed transmission wait time set for each traffic access category. The traffic access category includes, for example, "voice (VO)", "video (VI)", "best effort (BE)", "background (BK)", and "low latency (LL)". TXOP Limit indicates an upper limit value of a channel occupancy period TXOP.

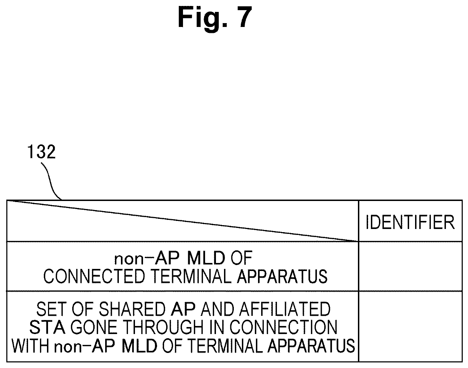

Fig. 7 is a table illustrating an example of a data structure of the terminal apparatus management information stored in the sharing AP according to the embodiment.

As illustrated in Fig. 7, the terminal apparatus management information 132 stores information regarding the terminal apparatus 30 wirelessly connected to the sharing AP 10 by the multi-AP connection method. Specifically, for example, the terminal apparatus management information 132 stores an identifier of the non-AP MLD of the terminal apparatus 30 and identifiers of the shared AP 20 and the affiliated STA gone through in the wireless connection with the non-AP MLD of the terminal apparatus 30.

The identifier of the non-AP MLD of the terminal apparatus 30 includes, for example, a MAC address of the non-AP MLD of the terminal apparatus 30.

The identifiers of the shared AP 20 and the affiliated STA gone through in the wireless connection with the non-AP MLD of the terminal apparatus 30 include, for example, a set of MAC addresses of the shared AP 20 and the affiliated STA. In the case of the connection example illustrated in Fig. 1, a set of MAC addresses of the shared AP 20-1 and the affiliated STA 1 and a set of MAC addresses of the shared AP 20-2 and the affiliated STA 2 are included.

As described above, the terminal apparatus management information 132 stores information specifying the non-AP MLD of the terminal apparatus 30 connected by the multi-AP connection method.

The functional configuration of the sharing AP 10 will be described with reference to Fig. 5 again.

Prior to start of the multi-AP connection, the frame processing unit 140 transmits the multi-AP management information 131 input from the management unit 130 to the shared APs 20-1, 20-2, and 20-3 belonging to the sharing AP 10 in a wired manner. In addition, at the time of the association processing, the frame processing unit 140 transmits information used to control the association processing input from the management unit 130 to the shared APs 20-1, 20-2, and 20-3 belonging to the sharing AP 10 in a wired manner.

After the multi-AP connection, when the LLC packet is input from the data processing unit 120, the frame processing unit 140 distributes the LLC packet to any one of the shared APs 20-1, 20-2, and 20-3 belonging to the sharing AP 10. For example, the frame processing unit 140 transmits the LLC packet to the shared AP 20 wirelessly connected to the terminal apparatus 30 among the shared APs 20-1, 20-2, and 20-3 belonging to the sharing AP 10 in a wired manner by referring to the terminal apparatus management information 132. Note that, in a case where a plurality of the shared APs 20 is connected to the terminal apparatus 30, the frame processing unit 140 may determine a transmission destination shared AP 20 according to a traffic identifier (TID) associated with an access category. In addition, at the time of the handover processing, the frame processing unit 140 transmits information used to control the handover processing to the shared APs 20-1, 20-2, and 20-3 belonging to the sharing AP 10 in a wired manner.

### 1.1.3.2 Functional Configuration of Shared AP

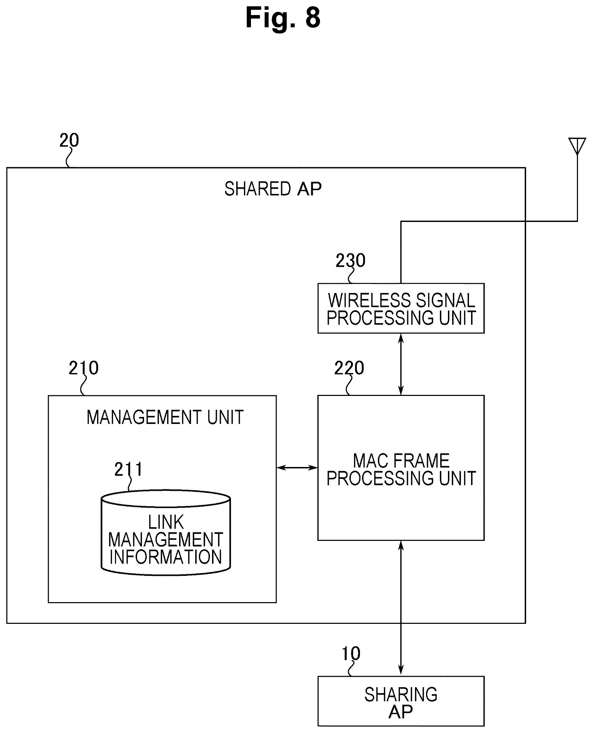

Fig. 8 is a block diagram illustrating an example of a functional configuration of the shared AP according to the embodiment.

The shared AP 20 functions as a computer including a management unit 210, a MAC frame processing unit 220, and a wireless signal processing unit 230. The management unit 210 and the MAC frame processing unit 220 are functional blocks that execute processing corresponding to the MAC sublayer of the second layer. The wireless signal processing unit 230 is a functional block that executes processing corresponding to the first layer.

Prior to the multi-AP connection, the management unit 210 generates a beacon frame including information related to the multi-AP connection. The beacon frame includes the multi-AP management information 131 received from the sharing AP 10. The management unit 210 informs the terminal apparatus 30 of the generated beacon frame via the wireless signal processing unit 230.

Further, the management unit 210 manages a physical wireless connection state between the shared AP 20 and the affiliated STA of the terminal apparatus 30 in the multi-AP connection. The management unit 210 stores link management information 211 as management information regarding the physical wireless connection of the multi-AP connection. Further, the management unit 210 may further store the multi-AP management information 131 transmitted from the sharing AP 10.

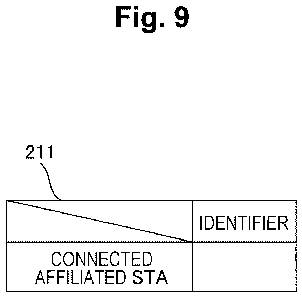

Fig. 9 is a table illustrating an example of a data structure of link management information stored in the shared AP according to the embodiment.

As illustrated in Fig. 9, in the link management information 211, an identifier for specifying the affiliated STA in the terminal apparatus 30 physically and wirelessly connected to the shared AP 20 in the multi-AP connection is stored. The identifier includes, for example, the MAC address of the affiliated STA. In the case of the connection example illustrated in Fig. 1, the link management information 211 in the shared AP 20-1 includes the MAC address of the affiliated STA 1. Further, the link management information 211 in the shared AP 20-2 includes the MAC address of the affiliated STA 2.

The functional configuration of the shared AP 20 will be described with reference to Fig. 8 again.

The MAC frame processing unit 220 adds a MAC header to the LLC packet received from the sharing AP 10 to generate a MAC frame. Then, the MAC frame processing unit 220 inputs the generated MAC frame to the wireless signal processing unit 230. Further, the MAC frame processing unit 220 transmits the MAC frame input from the wireless signal processing unit 230 to the sharing AP 10 in a wired manner.

The wireless signal processing unit 230 adds a preamble and the like to the MAC frame input from the MAC frame processing unit 220 to generate a wireless frame. The wireless signal processing unit 230 converts the generated wireless frame into a wireless signal. Then, the wireless signal processing unit 230 radiates (transmits) the converted wireless signal via an antenna. The conversion processing from the wireless frame to the wireless signal includes, for example, convolutional encoding processing, interleave processing, subcarrier modulation processing, inverse fast Fourier transform processing, orthogonal frequency division multiplexing (OFDM) modulation processing, and frequency conversion processing. Further, the wireless signal processing unit 230 converts the wireless signal from the terminal apparatus 30 received via the antenna into the wireless frame. The conversion processing from the wireless signal to the wireless frame includes, for example, frequency conversion processing, OFDM demodulation processing, fast Fourier transform processing, subcarrier demodulation processing, deinterleave processing, and Viterbi decoding processing. The wireless signal processing unit 230 extracts the MAC frame from the converted wireless frame. Then, the wireless signal processing unit 230 inputs the extracted MAC frame to the MAC frame processing unit 220.

### 1.1.3.3 Functional Configuration of Terminal Apparatus

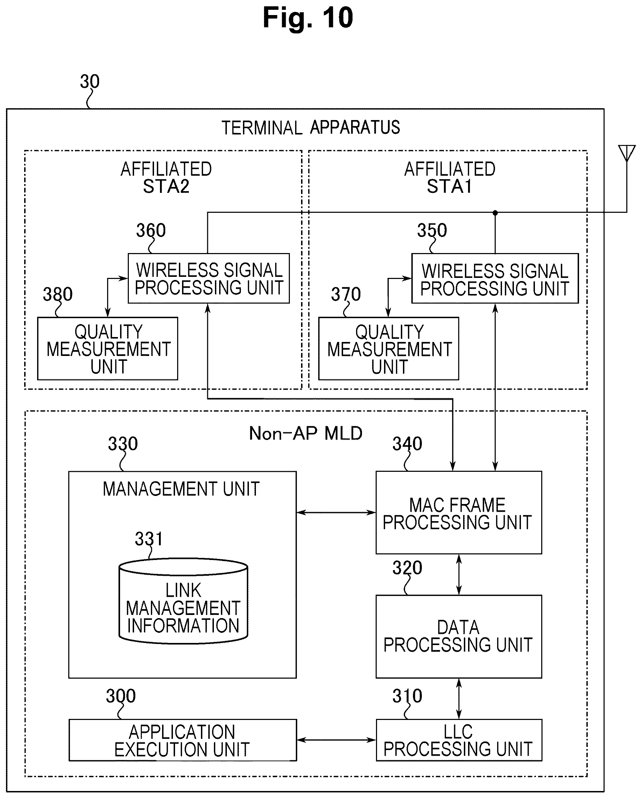

Fig. 10 is a block diagram illustrating an example of a functional configuration of the terminal apparatus according to the embodiment.

The terminal apparatus 30 functions as a computer including an application execution unit 300, an LLC processing unit 310, a data processing unit 320, a management unit 330, a MAC frame processing unit 340, wireless signal processing units 350 and 360, and quality measurement units 370 and 380. The application execution unit 300 is a functional block that executes processing corresponding to the seventh layer. The LLC processing unit 310 is a functional block that executes processing corresponding to the LLC sublayer of the second layer and the third layer to the sixth layer. The data processing unit 320, the management unit 330, and the MAC frame processing unit 340 are functional blocks that perform processing corresponding to the MAC sublayer of the second layer. The wireless signal processing units 350 and 360 and the quality measurement units 370 and 380 are functional blocks that execute processing corresponding to the MAC sublayer of the second layer and the first layer.

The application execution unit 300 executes an application on the basis of data input from the LLC processing unit 310. In addition, the application execution unit 300 inputs data to the LLC processing unit 310. For example, the application execution unit 300 can display application information on the display 35. Further, the application execution unit 300 can operate on the basis of operation of an input interface.

The LLC processing unit 310 adds a DSAP header, an SSAP header, and the like to the data input from the application execution unit 300 to generate an LLC packet. Then, the LLC processing unit 310 inputs the generated LLC packet to the data processing unit 320. In addition, the LLC processing unit 310 extracts data from the LLC packet input from the data processing unit 320. Then, the LLC processing unit 310 inputs the extracted data to the application execution unit 300.

The data processing unit 320 inputs the LLC packet input from the LLC processing unit 310 to the MAC frame processing unit 340. In addition, the data processing unit 320 inputs the LLC packet input from the MAC frame processing unit 340 to the LLC processing unit 310.

The management unit 330 controls the logical wireless connection between the sharing AP 10 and the non-AP MLD of the terminal apparatus 30 in the multi-AP connection. For example, the management unit 330 generates the association request on the basis of the multi-AP management information 131 included in the beacon frame from the shared AP 20. Further, the management unit 330 generates the handover request on the basis of a measurement results of the quality by the quality measurement units 370 and 380 so that instantaneous interruption does not occur in the physical wireless connection between the shared AP 20 and the affiliated STA of the terminal apparatus 30 in the multi-AP connection. Further, the management unit 330 stores link management information 331. The management unit 330 also stores the multi-AP management information 131 included in the beacon frame from the shared AP 20.

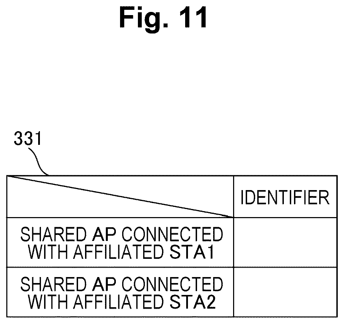

Fig. 11 is a table illustrating an example of a data structure of the link management information stored in the terminal according to the embodiment. Fig. 11 illustrates a data structure of the link management information 331 as an example of information stored in the terminal apparatus 30 in addition to the multi-AP management information 131.

As illustrated in Fig. 11, in the link management information 331, identifiers for specifying the shared APs 20 physically connected to the affiliated STA 1 and the affiliated STA 2 respectively in the terminal apparatus 30 in the multi-AP connection are stored. In the case of the connection example illustrated in Fig. 1, the MAC address of the shared AP 20-1 connected to the affiliated STA 1 and the MAC address of the shared AP 20-2 connected to the affiliated STA 2 are included.

The functional configuration of the terminal apparatus 30 will be described with reference to Fig. 10 again.

The MAC frame processing unit 340 adds a MAC header to the LLC packet received from the data processing unit 320 to generate a MAC frame. Then, the MAC frame processing unit 340 distributes the generated MAC frame to the wireless signal processing units 350 and 360. Further, the MAC frame processing unit 340 inputs the MAC frames input from the wireless signal processing units 350 and 360 to the data processing unit 320.

The data processing unit 320, the management unit 330, and the MAC frame processing unit 340 correspond to the non-AP MLD. Meanwhile, the wireless signal processing unit 350 and the quality measurement unit 370 correspond to the affiliated STA 1. The wireless signal processing unit 360 and the quality measurement unit 380 correspond to the affiliated STA 2. The wireless signal processing unit 350 and the quality measurement unit 370 have functional configurations equivalent to those of the wireless signal processing unit 360 and the quality measurement unit 380, respectively.

Each of the wireless signal processing units 350 and 360 adds a preamble and the like to the MAC frame input from the MAC frame processing unit 340 to generate a wireless frame. Each of the wireless signal processing units 350 and 360 converts the generated wireless frame into a wireless signal. Then, each of the wireless signal processing units 350 and 360 radiates (transmits) the converted wireless signal via an antenna. The conversion processing from the wireless frame to the wireless signal includes, for example, convolutional encoding processing, interleave processing, subcarrier modulation processing, inverse fast Fourier transform processing, OFDM modulation processing, and frequency conversion processing. In addition, each of the wireless signal processing units 350 and 360 converts the wireless signal from the corresponding shared AP 20 received via an antenna into the wireless frame. The conversion processing from the wireless signal to the wireless frame includes, for example, frequency conversion processing, OFDM demodulation processing, fast Fourier transform processing, subcarrier demodulation processing, deinterleave processing, and Viterbi decoding processing. Each of the wireless signal processing units 350 and 360 extracts the MAC frame from the converted wireless frame. Then, each of the wireless signal processing units 350 and 360 inputs the extracted MAC frame to the MAC frame processing unit 340.

The quality measurement units 370 and 380 measure the quality of the wireless signals received by the wireless signal processing units 350 and 360, respectively. The quality of the wireless signal is evaluated by, for example, measuring reception power or the like. Each of the quality measurement units 370 and 380 inputs a measurement result of the quality to the management unit 330.

### 1.2 Operation

Next, an operation in the communication system according to the embodiment will be described.

### 1.2.1 Association Processing

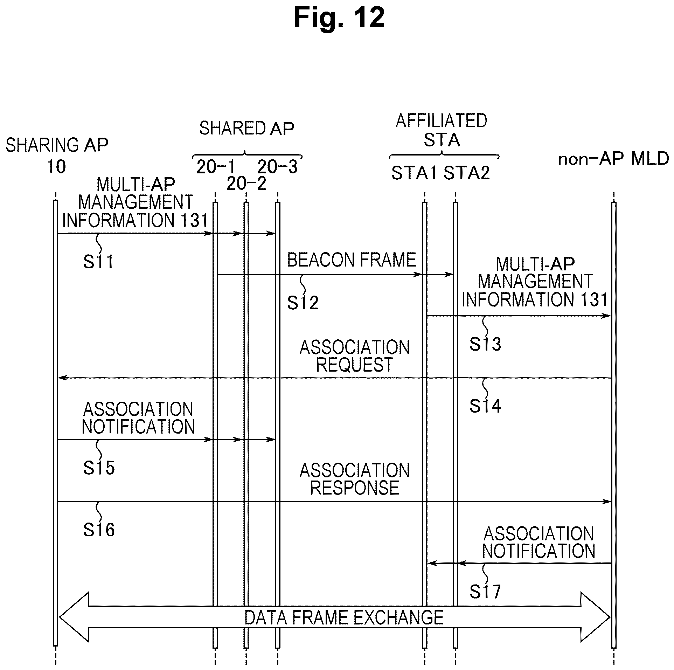

Fig. 12 is a sequence diagram illustrating an example of the association processing in the communication system according to the embodiment. Fig. 12 illustrates a flow of information exchanged among the sharing AP 10, the shared APs 20-1, 20-2, and 20-3, the affiliated STA 1 and the affiliated STA 2, and the non-AP MLD during the association processing.

The sharing AP 10 transmits the multi-AP management information 131 to each of the shared APs 20-1, 20-2, and 20-3 in a wired manner (S11).

Each of the shared APs 20-1, 20-2, and 20-3 generates the beacon frame on the basis of the multi-AP management information 131 received in the processing of S11. Then, each of the shared APs 20-1, 20-2, and 20-3 informs the affiliated STA 1 and the affiliated STA 2 of the generated beacon frame (S12).

Each of the affiliated STA 1 and the affiliated STA 2 receives the beacon frame informed in the processing of S12.
Then, each of the affiliated STA 1 and the affiliated STA 2 inputs the multi-AP management information 131 in the beacon frame to the non-AP MLD (S13).

The non-AP MLD generates the association request for performing the multi-AP connection on the basis of the multi-AP management information 131 input in the processing of S13, and transmits the association request to the sharing AP 10 (S14). The association request includes, for example, information regarding the shared APs 20 to which the affiliated STA 1 and the affiliated STA 2 respectively desire connection in the multi-AP connection. The association request is transmitted to the sharing AP 10 via at least one affiliated STA of the affiliated STA 1 and the affiliated STA 2 and at least one shared AP of the shared AP 20-1, 20-2, and 20-3.

The sharing AP 10 generates an association notification on the basis of the association request transmitted in the processing of S14. Then, the sharing AP 10 transmits the generated association notification to each of the shared APs 20-1, 20-2, and 20-3 in a wired manner (S15). The association notification includes information for notifying which shared AP 20 and which affiliated STA exchange data with each other in the wireless link established between the sharing AP 10 and the terminal apparatus 30. The association notification may include information equivalent to the association request transmitted in the processing of S14.

Further, the sharing AP 10 generates an association response on the basis of the association request transmitted in the processing of S14. Then, the sharing AP 10 transmits the generated association response to the non-AP MLD (S16). The association response is transmitted to the non-AP MLD via at least one shared AP of the shared AP 20-1, 20-2, and 20-3, and at least one affiliated STA of the affiliated STA 1 and the affiliated STA 2.

The non-AP MLD generates an association notification on the basis of the association response transmitted in the processing of S16. Then, the non-AP MLD inputs the generated association notification to each of the affiliated STA 1 and the affiliated STA 2 (S17).

As described above, the association processing for establishing the wireless link by the multi-AP connection between the sharing AP 10 and the non-AP MLD is completed. After the association processing is completed, the wireless link via the shared AP 20-1, the wireless link via the shared AP 20-2, and the wireless link via the shared AP 20-3 are comprehensively established between the sharing AP 10 and the non-AP MLD. Then, data exchange using the wireless link connecting at least one shared AP 20 of the shared AP 20-1, 20-2, and 20-3 and the corresponding affiliated STA becomes executable on the basis of content of the association notification.

### 1.2.2 Handover Processing

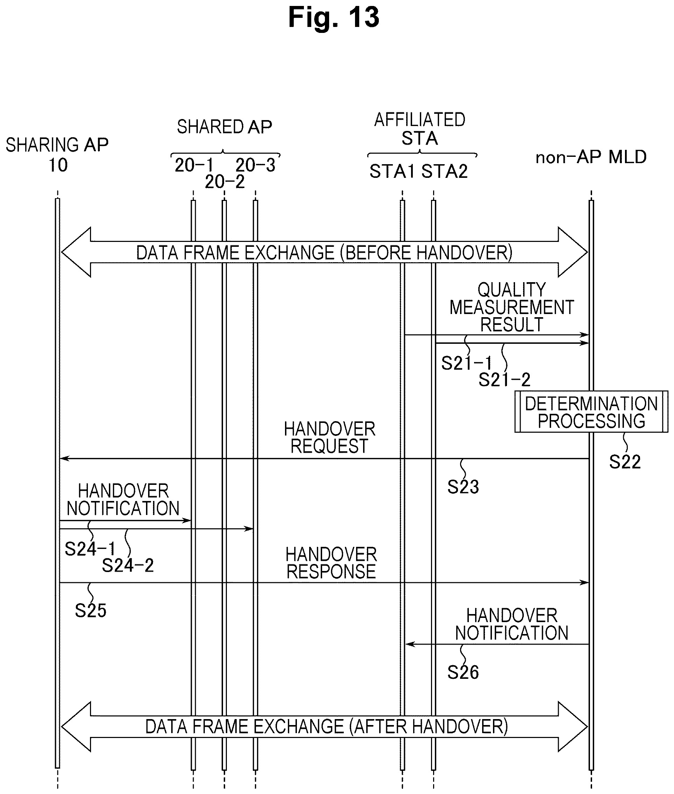

Fig. 13 is a sequence diagram illustrating an example of the handover processing in the communication system according to the embodiment. Fig. 13 illustrates a flow of information exchanged among the sharing AP 10, the shared APs 20-1, 20-2, and 20-3, the affiliated STA 1 and the affiliated STA 2, and the non-AP MLD during the handover processing.

Further, Fig. 13 illustrates a case where data is exchanged between the shared AP 20-1 and the affiliated STA 1 and between the shared AP 20-2 and the affiliated STA 2 before the handover processing. Then, Fig. 13 illustrates a case where the wireless link used for data exchange by the affiliated STA 1 is switched from the wireless link via the shared AP 20-1 to the wireless link via the shared AP 20-3 by the handover processing.

The affiliated STA 1 inputs the quality measurement result (for example, the reception power) of the wireless signal received through the multi-AP connection to the non-AP MLD (S21-1). Similarly, the affiliated STA 2 inputs the quality measurement result of the wireless signal received through the multi-AP connection to the non-AP MLD (S21-2).

The non-AP MLD executes determination processing on the basis of the quality measurement results input in the processing of S21-1 and the processing of S21-2 (S22). The determination processing is processing of determining whether or not to execute the handover processing. Details of the determination processing will be described below.

As a result of the determination processing in S22, in a case where it is determined that the handover processing is to be executed, the non-AP MLD generates the handover request and transmits the handover request to the sharing AP 10 (S23). The handover request includes, for example, information regarding the affiliated STA 1 that desires handover and the shared AP 20-3 to which the affiliated STA 1 newly desires connection. The handover request is transmitted to the sharing AP 10 via at least one affiliated STA of the affiliated STA 1 and the affiliated STA 2, and at least one shared AP of the shared AP 20-1, 20-2, and 20-3.

The sharing AP 10 generates a handover notification on the basis of the handover request transmitted in the processing of S23. Then, the sharing AP 10 transmits the generated handover notification to each of the shared APs 20-1 and 20-3 as handover targets in a wired manner (S24-1 and S24-2). The handover notification transmitted to the shared AP 20-1 includes information notifying stop of data exchange using the wireless link with the affiliated STA 1 (disconnection of the wireless link). The handover notification transmitted to the shared AP 20-3 includes information notifying start of data exchange using the wireless link with the affiliated STA 1.

Further, the sharing AP 10 generates a handover response on the basis of the handover request transmitted in the processing of S23. Then, the sharing AP 10 transmits the generated handover response to the non-AP MLD (S25). The handover response is transmitted to the non-AP MLD via at least one shared AP of the shared AP 20-1, 20-2, and 20-3, and at least one affiliated STA of the affiliated STA 1 and the affiliated STA 2.

The non-AP MLD generates a handover notification on the basis of the handover response transmitted in the processing of S25. The handover notification includes information indicating that the affiliated STA 1 targeted for handover is to be notified of the stop of data exchange with the shared AP 20-1 and the start of data exchange with the shared AP 20-3. Then, the non-AP MLD inputs the generated handover notification to the affiliated STA 1 targeted for handover (S26).

As described above, the handover processing for switching the wireless link used for data exchange by the affiliated STA 1 from the wireless link via the shared AP 20-1 to the wireless link via the shared AP 20-3 is completed. After the handover processing is completed, the data exchange is performed between the shared AP 20-3 and the affiliated STA 1 and between the shared AP 20-2 and the affiliated STA 2 between the sharing AP 10 and the non-AP MLD.

Note that, in the above-described handover processing, the sharing AP 10 may include information indicating timing of switching the wireless link for executing data exchange in the handover notification and the handover response. The timing of switching the wireless link for executing data exchange can be defined by, for example, the number of transmission times of the beacon frame after the handover notification and the handover response notification having reached a notified value, an elapsed time having arrived (countdown method), or the like. As a result, the shared APs 20-1 and 20-3 and the affiliated STA 1 can be timed in switching by the countdown method.

### 1.2.3 Determination Processing

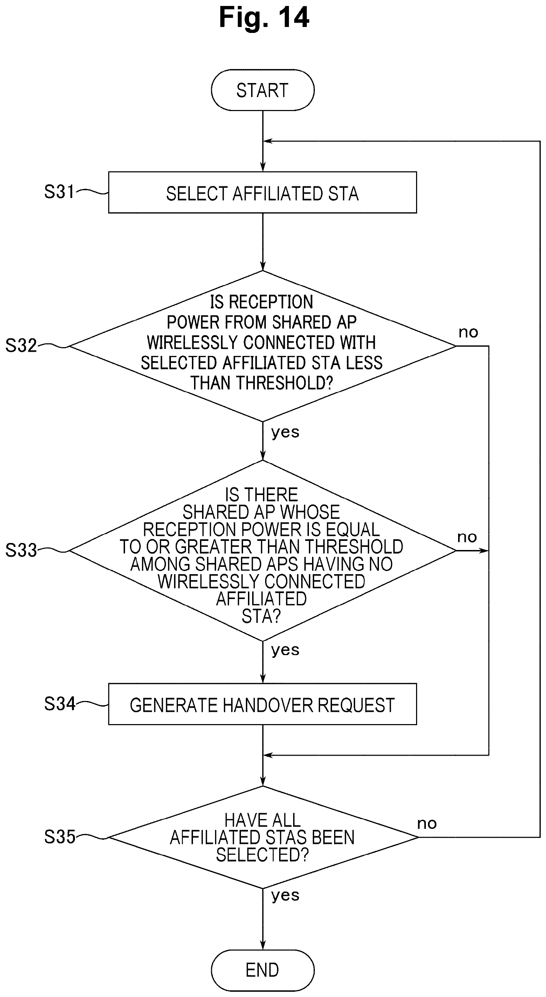

Fig. 14 is a flowchart illustrating an example of the determination processing in the communication system according to the embodiment. Fig. 14 illustrates a case where the reception power is measured as an example of the quality measurement result.

When the measurement result of the reception power of the wireless signal received by each of the affiliated STA 1 and the affiliated STA 2 is input (start), the non-AP MLD selects the affiliated STA for which the determination processing is executed (S31) .

The non-AP MLD determines whether or not the reception power from the shared AP 20 to which the affiliated STA selected in the processing of S31 is connected is less than a threshold (S32).

In a case where the reception power from the connected shared AP 20 is less than the threshold (S32; yes), the non-AP MLD determines whether or not there is a shared AP 20 whose reception power is equal to or greater than the threshold among the shared APs 20 having no affiliated STA connected thereto (S33).

In a case where there is a shared AP 20 whose reception power is equal to or greater than the threshold among the shared APs 20 having no affiliated STA connected thereto (S33; yes), the non-AP MLD generates the handover request (S34). The handover request includes information requesting switching of the wireless link used by the affiliated STA selected in the processing of S31 from the wireless link via the shared AP 20 whose reception power is determined in the processing of S32 to the wireless link via the shared AP 20 whose reception power is determined in the processing of S33.

After the processing of S34, or in a case where the reception power from the connected shared AP 20 is equal to or greater than the threshold (S32; no), or in a case where the reception power from the unconnected shared AP 20 is less than the threshold (S33; no), the non-AP MLD determines whether or not all the affiliated STAs have been selected (S35).

In a case where there is an unselected affiliated STA (S35; no), the non-AP MLD selects the unselected affiliated STA (S31). Thereafter, the subsequent processing of S32 to S35 is executed. In this manner, the processing of S31 to S35 is executed until all the affiliated STAs are selected.

In a case where all the affiliated STAs have been selected (S35; yes), the determination processing ends (end).

### 1.3 Effects According to Embodiment

According to the embodiment, the sharing AP 10 comprehensively establishes the wireless link via the shared AP 20-1, the wireless link via the shared AP 20-2, and the wireless link via the shared AP 20-3 with the non-AP MLD of the terminal apparatus 30. Specifically, the sharing AP 10 transmits the association notification to each of the shared APs 20-1, 20-2, and 20-3, and notifies the non-AP MLD of the terminal apparatus 30 of the association response in response to the association request from the terminal apparatus 30. The non-AP MLD of the terminal apparatus 30 inputs the association notification to the affiliated STA 1 and the affiliated STA 2 on the basis of the association response. As a result, each of the shared APs 20-1, 20-2, and 20-3 can execute data exchange with the terminal apparatus 30 without individually performing handshake by association processing.

Note that the shared APs 20-1, 20-2, and 20-3 are provided at positions away from one another. In such a case, the communicable areas of the shared APs 20-1, 20-2, and 20-3 are different from one another. Therefore, in a case where the terminal apparatus 30 communicates with the sharing AP 10 while moving, handover may occur.

According to the embodiment, the sharing AP 10 switches the wireless link used for data exchange by the affiliated STA 1 from the wireless link via the shared AP 20-1 to the wireless link via the shared AP 20-3. Specifically, the sharing AP 10 notifies the shared AP 20-1 of the stop of the data exchange with the affiliated STA 1 and notifies the shared AP 20-3 of the start of the data exchange with the affiliated STA 1 in response to the handover request from the terminal apparatus 30. In addition, the sharing AP 10 notifies the non-AP MLD of the terminal apparatus 30 of the handover response. The non-AP MLD of the terminal apparatus 30 notifies the affiliated STA 1 of the stop of the data exchange with the shared AP 20-1 and the start of the data exchange with the shared AP 20-3 based on the handover response. As a result, the affiliated STA 1 can switch the data exchange destination without individually performing handshake by the handover processing with the shared APs 20-1 and 20-3. Therefore, it is possible to suppress occurrence of instantaneous interruption due to the handover processing, and to reduce a delay caused in the data exchange.

In addition, the sharing AP 10 and each of the shared APs 20-1, 20-2, and 20-3 are connected by wire. As a result, the communication between the sharing AP 10 and each of the shared APs 20-1, 20-2, and 20-3 can be performed in a wired manner. As a result, it is possible to reduce a load of various types of processing required for wireless connection as compared with a case where the sharing AP 10 and each of the shared APs 20-1, 20-2, and 20-3 are wirelessly connected.

### 2. Modifications and the like

Note that various modifications can be applied to the above-described embodiment.

For example, in the above-described embodiment, a case where data is not directly exchanged between the sharing AP 10 and the affiliated STA of the terminal apparatus 30 has been described, but the present invention is not limited thereto. For example, the sharing AP 10 may directly exchange data with the affiliated STA of the terminal apparatus 30.

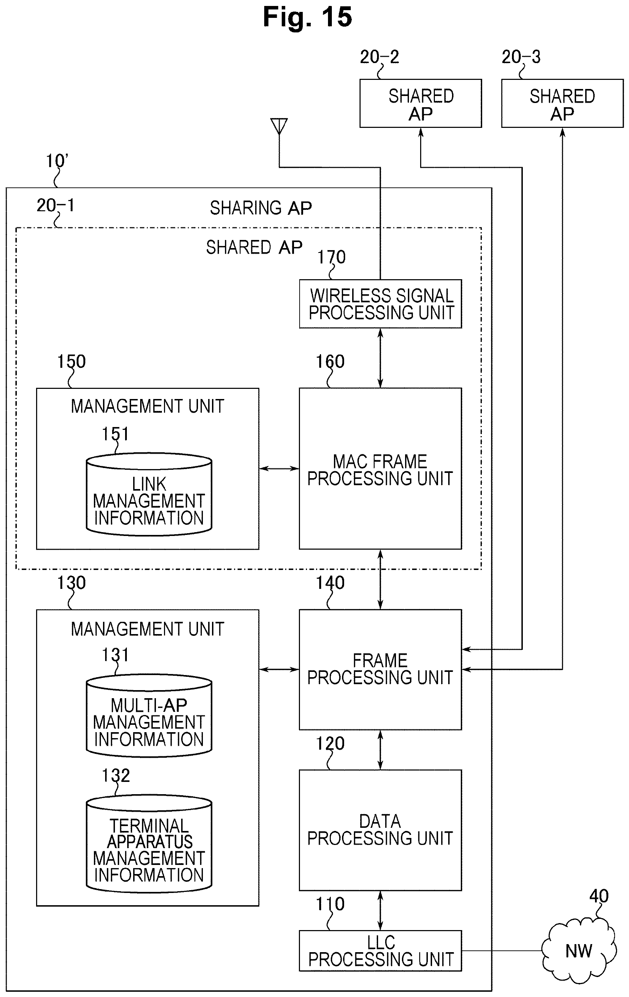

Fig. 15 is a block diagram illustrating an example of a functional configuration of a sharing AP according to a modification. Fig. 15 corresponds to Fig. 5 in the embodiment.

As illustrated in Fig. 15, a sharing AP 10' may further have a function as the shared AP 20-1. In this case, (the shared AP 20-1 included in) the sharing AP 10, the shared AP 20-2, and the shared AP 20-3 are provided at positions physically separated from one another.

Specifically, the sharing AP 10' further includes a management unit 150, a MAC frame processing unit 160, and a wireless signal processing unit 170. The management unit 150 stores link management information 151. The configurations of the management unit 150, the link management information 151, the MAC frame processing unit 160, and the wireless signal processing unit 170 are equivalent to the configurations of the management unit 210, the link management information 211, the MAC frame processing unit 220, and the wireless signal processing unit 230 in the embodiment.

With the above configurations, the sharing AP 10' can also function as the shared AP 20. As a result, the degree of freedom of a network configuration of the multi-AP connection that can be used by the terminal apparatus 30 can be improved.

Although not illustrated, the shared AP 20 may have a configuration for functioning as the sharing AP 10. That is, all the access points may be configured to be able to function as both the sharing AP 10 and the shared AP 20. As a result, the degree of freedom of a network configuration of the multi-AP connection that can be used by the terminal apparatus 30 can be further improved.

Further, in the above-described embodiment, a case where the three shared APs 20-1, 20-2, and 20-3 belong to the sharing AP 10 has been described, but the present invention is not limited thereto. For example, the number of shared APs 20 belonging to the sharing AP 10 may be one, two, or four or more.

Further, in the above-described embodiment, a case where the sharing AP 10 and the shared APs 20-1, 20-2, and 20-3 are provided apart from one another has been described, but the present invention is not limited thereto. For example, even if the sharing AP 10 and the three shared APs 20-1, 20-2, and 20-3 are not necessarily provided apart from one another, it is possible to provide a wireless communication environment by the multi-AP connection method capable of switching access points without causing instantaneous interruption.

Further, the association processing and the handover processing in the sharing AP 10, the shared APs 20, and the terminal apparatus 30 according to the above-described embodiment can be stored as a program that can be executed by a processor that is a computer. Further, the program can be stored in a storage medium of an external storage device such as a magnetic disk, an optical disc, or a semiconductor memory for distribution. Then, the processor of each of the sharing AP 10, the shared APs 20, and the terminal apparatus 30 reads the program stored in the storage medium of the external storage device, and the operation is controlled by the read program, whereby the association processing and the handover processing can be executed.

Note that the present invention is not limited to the foregoing embodiments and various modifications can be made in an implementation stage without departing from the gist of the invention. Further, the embodiments may be implemented in appropriate combination, and in this case, a combined effect can be obtained. Moreover, the above embodiments include various inventions, and various inventions can be extracted by a combination selected from the plurality of disclosed components. For example, in a case where the problems can be solved and the effects can be obtained even if some components are deleted from all the components described in the embodiment, a configuration from which the components are deleted can be extracted as an invention.

### Reference Signs List

1 Communication system
10, 10' Sharing AP
20 Shared AP
30 Terminal
40 Network
11, 21, 31 CPU
12, 22, 32 ROM
13, 23, 33 RAM
14, 15, 25 Wired communication module
24, 34 Wireless communication module
35 Display
36 Storage
110, 310 LLC processing unit
120, 320 Data processing unit
130, 150, 210, 330 Management unit
140 Frame processing unit
160, 220, 340MAC frame processing unit
170, 230, 350, 360 Wireless signal processing unit
300 Application execution unit
370, 380 Quality measurement unit
131 Multi-AP management information
132 Terminal management information
151, 211, 331Link management information

## Claims

1. A terminal apparatus in a communication system including a sharing access point, a shared access point and another shared access point provided at positions away from the sharing access point, and the terminal apparatus,
the terminal apparatus being configured to:
when a first wireless link with the sharing access point via the shared access point is established,
request the sharing access point to switch from the first wireless link; and
switch from the first wireless link to a second wireless link with the sharing access point via the another shared access point in response to a notification based on the request from the sharing access point to the shared access point and the another shared access point.

2. The terminal apparatus according to claim 1, wherein
the first wireless link is established without handshaking between the shared access point and the terminal apparatus, and
the second wireless link is established without handshaking between the another shared access point and the terminal apparatus.

3. A sharing access point in a communication system including the sharing access point, a shared access point and another shared access point provided at positions away from the sharing access point, and a terminal apparatus,
the sharing access point being configured to:
when a first wireless link with the terminal apparatus via the shared access point is established, notify the shared access point and the another shared access point of switching from the first wireless link to a second wireless link with the terminal apparatus via the another shared access point in response to a request from the terminal apparatus requesting switching from the first wireless link.

4. The sharing access point according to claim 3, wherein
the first wireless link is established without handshaking between the shared access point and the terminal apparatus, and
the second wireless link is established without handshaking between the another shared access point and the terminal apparatus.

5. A shared access point in a communication system including a sharing access point, the shared access point and another shared access point provided at positions away from the sharing access point, and a terminal apparatus,
the shared access point being configured to:
when a first wireless link via the shared access point is established among wireless links between the sharing access point and the terminal apparatus, disconnect the first wireless link in response to a notification from the sharing access point to the shared access point based on a request of switching from the first wireless link from the terminal apparatus to the sharing access point.

6. The shared access point according to claim 5, wherein
the first wireless link is established without handshaking between the shared access point and the terminal apparatus.

7. A communication method of a terminal apparatus in a communication system including a sharing access point, a shared access point and another shared access point provided at positions away from the sharing access point, and the terminal apparatus,
the communication method comprising:
when a first wireless link with the sharing access point via the shared access point is established,
requesting the sharing access point to switch from the first wireless link; and
switching from the first wireless link to a second wireless link with the sharing access point via the another shared access point in response to a notification based on the request from the sharing access point to the shared access point and the another shared access point.

8. A communication method of a sharing access point in a communication system including the sharing access point, a shared access point and another shared access point provided at positions away from the sharing access point, and a terminal apparatus,
the communication method comprising:
when a first wireless link with the terminal apparatus via the shared access point is established, notifying the shared access point and the another shared access point of switching from the first wireless link to a second wireless link with the terminal apparatus via the another shared access point in response to a request from the terminal apparatus requesting switching from the first wireless link.

9. A communication method of a shared access point in a communication system including a sharing access point, the shared access point and another shared access point provided at positions away from the sharing access point, and a terminal apparatus,
the communication method comprising:
when a first wireless link via the shared access point is established among wireless links between the sharing access point and the terminal apparatus, disconnecting the first wireless link in response to a notification from the sharing access point to the shared access point based on a request of switching from the first wireless link from the terminal apparatus to the sharing access point.
